# EUROPEAN PATENT APPLICATION

(11) **EP 2 051 537 A1**
(43) Date of publication of application: **22.04.2009**
(21) Application number: 07291277.7
(22) Date of filing: 19.10.2007
(51) Int. Cl.: H04Q 3/00

(54) **Seamless PSTN migration to NGN**

(71) Applicant: Alcatel Lucent, 75008 Paris (FR)
(72) Inventor: Schmidt, Hartmut, 71717 Beilstein (DE)
(74) Representative: Kohler Schmid Möbus

(57) **Abstract**

The invention relates to a method for migrating a public switch, hereafter referred to as PS, complex (5a;5b) to a next generation network, hereafter referred to as NGN, system (14) in a telecommunication network (1), wherein the PS complex (5a;5b) is connected at least to a first edge PS (9) and a second edge PS (10;7a), wherein the PS complex (5a;5b) comprises a first PS (6), hereafter referred to as first complex PS, connected to the first edge PS (9), with the following steps:
a) the NGN system (12) is introduced to the telecommunication system (1), wherein new connections including a signalling line (15,18,20) and a bearer line (16,19,21) each are established between at least
- the NGN system (14) and the first complex PS (6), and
- the NGN system (14) and the second edge PS (10;7a),
and wherein an auxiliary signalling line (17) is established between the NGN system (14) and the first complex PS (6);
b) the NGN system (14) is inserted into the signalling communication between the first edge PS (9) and the first complex PS (6) by
- establishing a first logical network (LN10) on the NGN system (14), using the same point code (PC 2) as the first edge PS (9), and linking the first complex PS (6) with the first logical network (LN10) by means of the auxiliary signalling line (17),
- establishing a second logical network (LN11) on the NGN system (14), using the same point code (PC 6) as the first complex PS (6), and linking the first edge PS (9) and the second logical network (LN11) by disconnecting the signalling line (27) between the first edge PS (9) and the first complex PS (6) from the first complex PS (6), and reconnecting said signalling line (27) to the second logical network (LN11). The inventive method reduces administrative communication effort and risk of outage upon migration.

## Description

### Background of the invention

The invention relates to a method for migrating a public switch (=PS) complex to a next generation network (=NGN) system in a telecommunication network,
wherein the PS complex is connected at least to a first edge PS and a second edge PS,
wherein the PS complex comprises one or more complex PSs, with a first complex PS connected to the first edge PS,
wherein the connections between PSs in the telecommunication network comprise signalling lines and bearer lines, and wherein the first edge PS has assigned a point code, and the first complex PS has assigned a point code.

State of the art telecommunication is based on telecommunication networks, comprising numerous public switches interlinked by signalling lines and bearer lines. The signalling lines are used to establish telecommunication connections, and bearer lines are used to transmit the content of communication (such as voice with telephone networks). For a particular telecommunication connection between two edge public switches (such as point of interconnect public switches of a carrier or regional network), a sequence of public switches is involved, which link the two access points.

However, in the future, more and more often telecommunication networks will be based on next generation network (NGN) technology. In such a telecommunication network, an NGN system is established for linking two edge public switches. NGN systems may, for example, apply voice over internet protocol (VOIP).

A problem arises when an existing conventional public switched telecommunication network (=PSTN) is to be upgraded to NGN technology. The only known approach known so far is to shut down the PSTN, disconnect the PSTN, connect the new NGN system, and boot the new NGN system. This approach implies significant outage of the telecommunication network, and bears a high risk that the newly installed NGN system does not work properly in the beginning, what may make further shutdown and rebooting cycles necessary.

Further, when installing the NGN system, any peering edge public switch must be noticed, and replacing all public switches of a PSTN network for upgrading purposes may require some rather time consuming communication effort.

### Object of the invention

It is the object of the invention to introduce a method for migrating a conventional PSTN network to NGN technology at a reduced communication effort, and with a reduced risk of outage.

### Short description of the invention

This object is achieved, in accordance with the invention, by a method as introduced in the beginning, with the following steps:
a) the NGN system is introduced to the telecommunication system, wherein new connections including a signalling line and a bearer line each are established between at least
   - the NGN system and the first complex PS, with assigning a first additional point code to the NGN system, and
   - the NGN system and the second edge PS, with assigning a second additional point code to the NGN system, and wherein an auxiliary signalling line is established between the NGN system and the first complex PS;
b) the NGN system is inserted into the signalling communication between the first edge PS and the first complex PS by
   - establishing a first logical network on the NGN system, using the same point code as the first edge PS, and linking the first complex PS with the first logical network by means of the auxiliary signalling line,
   - establishing a second logical network on the NGN system, using the same point code as the first complex PS, and linking the first edge PS and the second logical network by disconnecting the signalling line between the first edge PS and the first complex PS from the first complex PS, and reconnecting said signalling line to the second logical network.
      According to the invention, a public switch (=PS) complex which interlinks a first edge public switch and a second edge public switch is upgraded to an NGN system. By means of the inventive method, the upgrade takes place in a "transparent" way, meaning that the first edge PS does not notice a change in the signalling communication when the NGN system is introduced into the signalling to the first complex PS (i.e. the peering PS complex). This reduces the communication effort with the first edge PS enormously, what is particularly useful when the first edge PS belongs to a foreign telecom provider. The "transparent" upgrade is possible, in particular, by applying the first and second logical network and their point codes (signalling point codes) which copy characteristics of the first edge PS and first complex PS, respectively, in the NGN system. The only (and minimal) disturbance in the inventive method is the change of connection of the first edge PS's signalling line from the first complex PS to the second logical network.
      After steps a) and b), only the signalling connections (typically SS7 links) have been altered. The bearer connections (and in particular the bearer lines) have not changed yet. Thus the invention proposes to separate the steps of altering the signalling connections and the bearer connections. When the signalling works fine at this stage, one can continue with changing the bearer lines, too, with a better chance for a faultless migration.
      At the same time, steps a) and b) prepare the migration of the bearer lines in a way that allows a well directed routing of telecommunication messages, in particular via the old PS complex or via the new NGN system alternatively. This choice can be made, in principle, for every single communication, since a routing on the level of the messages (with inspection of every message) has been prepared by means of the NGN system and its logical networks, together with the above described point codes.

### Preferred variants of the invention

A highly preferred variant of the inventive method is characterized by the further step of c) performing a trunk group split of the bearer line connecting the first edge PS and the first complex PS, such that a split part of said bearer line connects the first edge PS and the NGN system, and a remaining part of said bearer line still connects the first edge PS and the first complex PS, and handling telecommunication connections of the telecommunication network between the first edge PS and the second edge PS by
- routing a first part of said telecommunication connections by means of a sequence of: second edge PS - NGN system via second additional point code
- second local network using the point code of the first complex PS - split part of said bearer line - first edge PS, or the other way around;
- routing a second part of said telecommunication connections by means of a sequence of: second edge PS - NGN system via second additional point code
- NGN system via first additional point code - first complex PS - remaining part of said bearer line - first edge PS, or the other way around.
   According to this variant, in the transition phase, the bearer communication is split between two partial trunk groups. A split part (or first part) part of the bearer communication is done between the first edge PS and the NGN system (here typically the second logical network), and a remaining part is done between the first edge PS and the first complex PS. Note that the split ratio can typically be controlled by the NGN system. The first part routing does completely without the PS complex (and in particular without the first complex PS). Thus the trunk group split allows a relatively safe testing (e.g. including determining error rates) of the newly established bearer communication via the NGN system with a limited fraction of all telecommunication connections. This guarantees that even in case of problems with the first part (split part of the bearer line), a minimum telecommunication service can be maintained by the second part (remaining part of the bearer line). One can even return (fall back) to the remaining part (second part routing) alone, if needed, without difficulties. Note that the routing is done on the level of the messages here. Further note that in case of *incoming* telecommunication connections (i.e. a call comes from the first edge PS and seeks a link to the second edge PS), the routing typically includes a CIC routing function established between the first and second logical network for filtering or distributing the telecommunication connections (or calls).

In a preferred further development of this variant, the trunk group split has a fixed ratio of first part and second part telecommunication connections, for instance 50% / 50%. It is also possible to have the first part to second part ratio at a rather low value in the beginning, such as less than or equal to 10% / 90%, and to increase the ratio later on in case the first part routing works fine. By this means, during a first test phase, in case of problems, only a small number of telecommunication connections is affected with the problems. The overall capacity remains high in any case.

Alternatively, in another further development of said variant, the telecommunication connections to be established are primarily routed as first part up to the capacity of the first part routing, and further telecommunication connections are routed as overflow second part.

Another preferred further development to the above variant is characterized in that after step c), if the routing of the first part of the telecommunication connections works fine, the remaining part of said bearer line is also transferred to the NGN system, and all telecommunication connections are routed by means of the sequence of: second edge PS - NGN system via second additional point code - second local network using the point code of the first complex PS - completely transferred bearer line - first edge PS, or the other way around. This processing prepares a final removal of the PS complex, or at least the first edge PS, from the telecommunication network for completing the migration.

Further preferred is a further development of the above method, wherein in case a telecommunication connection is originating from the second edge PS and terminating at the first edge PS, a call state machine within the NGN system is used for making a routing decision for said telecommunication connection. The call state machine is also referred to as CFCS, and allows a reliable connection distribution on the call level (i.e. the application layer No. 7 in the ISO/OSI standard), taking into account criteria such as costs, availability of connections or capacity utilization.

Another preferred further development is characterized in that in case a telecommunication connection is originating form the first edge PS and terminating at the second edge PS, a CIC routing function established between the first and second logical networks in the NGN system is used for making a routing decision for said telecommunication connection. The CIC routing function uses the CIC (=circuit identification number), which is part of a SS7 (signalling system No. 7) message. The CIC is a reference to a channel (in the bearer lines) for which the message is valid. The CIC routing function allows a reliable filtering according to the responsibility for a bearer channel. It decides who is responsible for the channel referenced in CIC. Note that this function is not existent in standards of the state of the art.

Another variant of the inventive method is characterized by a subsequent step c') of completely transferring the bearer line connecting the first edge PS and the first complex PS from the first complex PS to the NGN system in a single step, and routing all telecommunication connections by means of the sequence of: second edge PS - NGN system via second additional point code - second logical network using the point code of the first complex PS - completely transferred bearer line - first edge PS, or the other way around. In this variant, the migration is accelerated as compared to a the variant using a trunk group split. Note that for routing of outgoing and incoming telecommunication connections, again CFCS and CIC routing can be used, respectively.

In an advantageous variant of the inventive method, the first edge PS is a point of interconnection PS of a public switched telecommunication network (=PSTN), and/or the second edge PS is a point of interconnection PS of a PSTN, in particular wherein the PSTN is a national telephone network or carrier. This variant refers to important network applications, for which the inventive method is particularly useful. The PSTN may also be a regional or local network, though.

Further preferred is a variant characterized in that a multitude of PS complexes is migrated according to the inventive method subsequently. In particular, it is possible to migrate single public switches in a telecommunication network separately or in groups. All PS complexes can be migrated with a minimum of disturbance for the residual telecommunication network.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawing and detailed description of the invention

The invention is shown in the drawing.
- Fig. 1a: shows schematically a telecommunication network to which the inventive method can be applied;
- Fig. 1b-Fig. 1f: illustrates the course of the inventive method applied at the telecommunication network of Fig. 1 a with an outgoing telecommunication connection, originated at a second edge public switch and terminated at a first edge public switch;
- Fig. 2a-2d: illustrates the course of the inventive method applied at the telecommunication network of Fig. 1 a with an incoming telecommunication connection, originated at a first edge public switch and terminated at a second edge public switch;
- Fig. 3a-3d: illustrates the course of the inventive method applied at the telecommunication network of Fig. 1 a with transit telecommunication connection.

### Overview

The invention relates to the migration of telecommunication networks to NGN (next generation network) technology. Conventional telecommunication networks (PSTNs), such as international telephone networks, consist basically of a couple of public switches (PSs). With the invention, one, several or all of these public switches shall be replaced. In general, such a migration should be performed with low impact with respect to peering equipment, such as peering carriers.

By means of the invention, an NGN system is introduced into a telecommunication network, in particular its signaling connections (such as SS7 lines) in a "covered" way, so that peering equipment (namely the first edge PS) does not notice this. After this, the migration of the bearer lines can be undertaken in a very versatile manner, allowing an immediate complete or (preferably) a stepwise migration. For the latter purpose, the NGN system can split trunk groups to other carriers and maintain one part of the trunk group in the NGN system, while the other part is maintained by the old PSTN network. After that phase, when the NGN related trunk group part operates as expected, the other trunk group part can also be transferred from the PSTN network, which makes it obsolete in the end.

In the following, the inventive method is described in detail by way of example.

### Inventive method with respect to outgoing calls

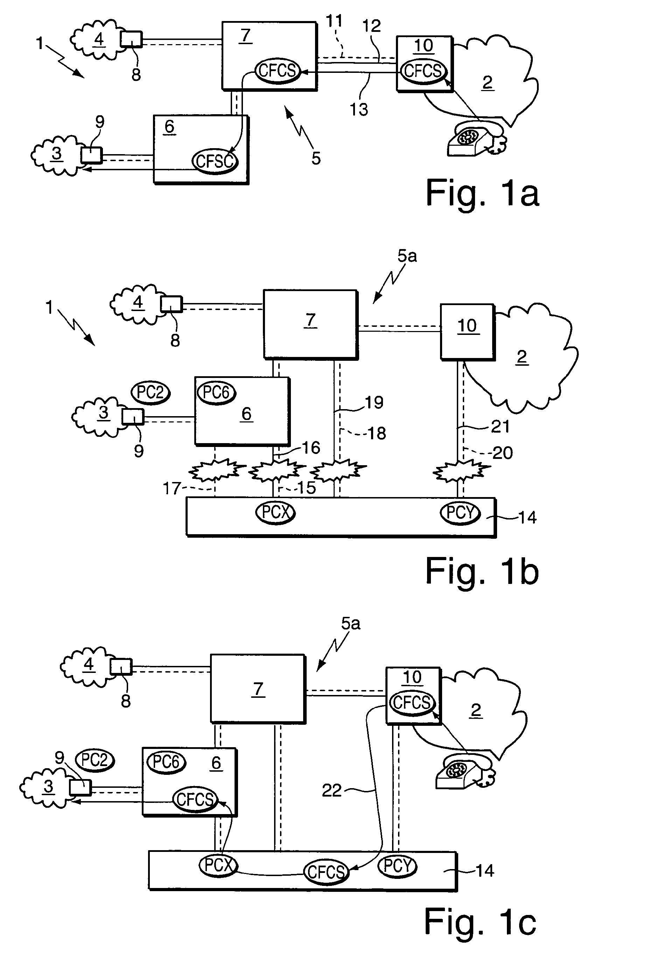

A typical telecommunication network 1 of an international telecom provider is illustrated in **Fig. 1a****.** The telecom provider owns a (here) regional PSTN network 2, which is connected to a several (here two) foreign carriers 3, 4 by means of a conventional PSTN network 5. The conventional PSTN network 5, which is also owned by said telecom provider, comprises several (here two) public switches 6, 7, as well as some interconnecting signaling lines 11, typically SS7 lines (marked dashed), and bearer lines 12 (marked in full). The carriers 3, 4 and the regional PSTN network 2 each comprise at least one point of interconnection public switch 8, 9, 10, by means of which the carriers 3, 4 and the regional PSTN network 2 are connected to the conventional PSTN network 5.

A call originating from the regional PSTN network 2, and targeting to a foreign carrier, here carrier 3 ("outgoing call"), is routed to the conventional PSTN network 5. The point of interconnection PS 10 provides the call via SS7 signaling to the PSs 7, 6 of the conventional international PSTN network 5. Note that the PSs 6, 7, 10 are provided with call state machines CFCS for this purpose. The ISUP flow 13 of this call is marked with arrows (ISUP: ISDN user part; ISDN: integrated services digital network). Any call originating in the regional PSTN network 2 and targeting a foreign subscriber will be routed via one or more PSs 6, 7 of the conventional PSTN network 5.

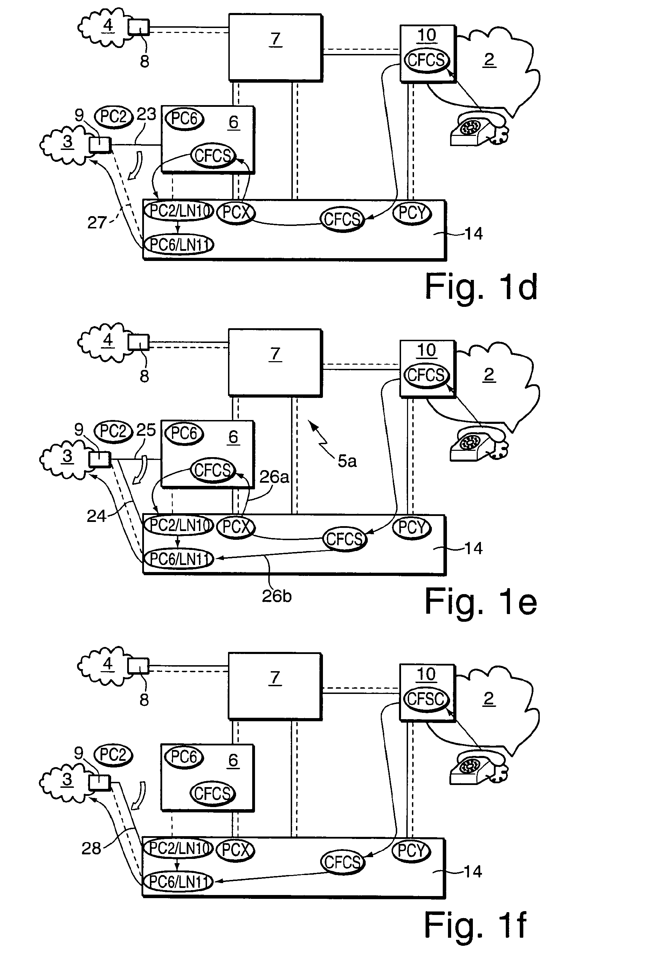

The provider now intends to replace public switches 6, 7 of his conventional PSTN network 5 with an NGN system in the telecommunication network 1 with respect to outgoing calls from his regional PSTN network 2 to (foreign) carrier 3 (compare arrows 13 of ISUP flow in Fig. 1 a). The migration should be "transparent" for the foreign carrier 3, i.e. carrier 3 shall not notice (or be disturbed by) this migration. The inventive method of migration is illustrated by the Figures 1b through 1f.

For the purpose of this description, the entirety of public switches which are to be replaced (migrated) is referred to as a public switch complex 5a (which is here identical to the entire conventional PSTN network 5, with the public switches 6, 7), with the PSs contained therein referred to as complex PSs 6, 7, see **Fig. 1b****.** Complex PS 6, which peers the (foreign) carrier 3, is referred to as the first complex PS 6. The PSs which peer the PS complex 5a are referred to as edge PSs, with the edge PS 9 of foreign carrier 3 peering the first complex PS 6 referred to as the first edge PS 9, and the edge PS 10 of regional PSTN network 2 referred to as the second edge PS 10.

With regard to the introduction of an NGN system 14 (i.e. an NGN network which replaces the PS complex 5a of the conventional PSTN network 5), multiple step modifications are required before any carrier can be maintained by the NGN system. Fig. 1b illustrates the NGN system preparation. The NGN system 14 will communicate with the telecommunication system 1 basically such as any other PS (or PSTN node). For the other PSs, the NGN system is seen as another PS such as for network extension. New signaling lines and bearer lines are established, and additional point codes for SS7 will be requested. Also towards the regional PSTN network 2, additional signaling and trunk resources are requested.

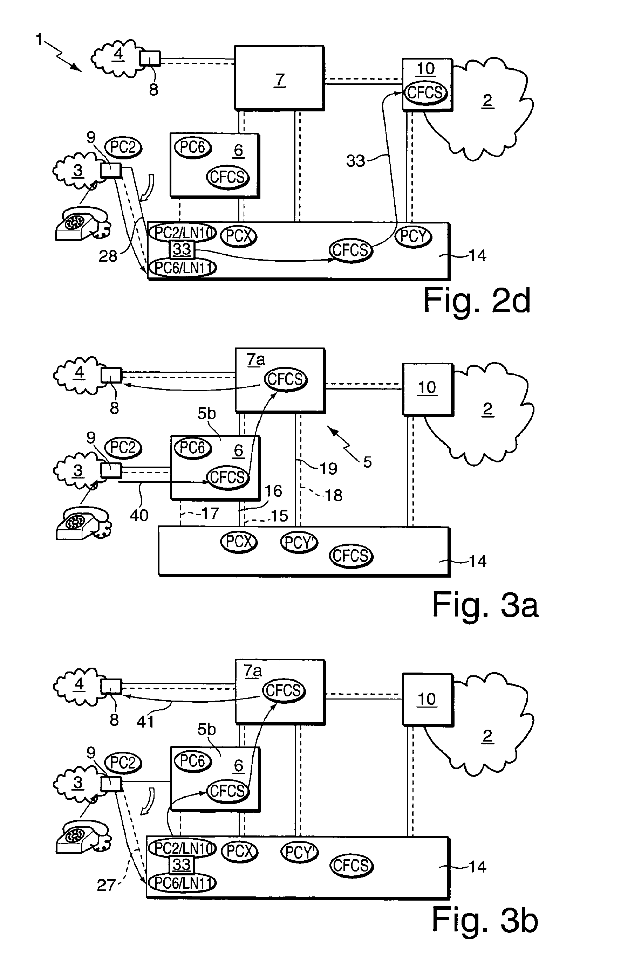

More specifically, new signaling lines 15 and new bearer lines 16 as well as an auxiliary signaling line 17 are established between the first complex PS 6 and NGN system 14, wherein a first additional point code, here named PC X, is assigned to the signaling connection 15 by the NGN system 14. Further, new signaling lines 18 and new bearer lines 19 are established between the second complex PS 7 and NGN system 14 (note that these lines 18, 19 are not necessary in the migration example of Fig. 1b-1f, but later on for the migration example of Figs. 3a-3d; however, they are already established at this preparatory stage here for convenience). Further, new signaling lines 20 and new bearer lines 21 are established between the second edge PS 10 and NGN system 14, wherein a second additional point code, here named PC Y, is assigned to the signaling connection 20 by the NGN system 14.

With these modifications to the PS complex 5a and the regional PSTN network 2, some prefixes for countries can be changed to the NGN system 14 in the routing, see **Fig. 1c****.** In the example shown, prefixes for calls to carrier 3 are rerouted towards the NGN system 14, see arrows 22 for the ISUP flow. The NGN system 14 will then route this traffic over the PS complex 5a, since the carriers (here carrier 3) are still connected thereto. As mentioned before, additional SS7 point codes PC X, PC Y and trunks (i.e. lines) are used between the regional PSTN network 2, the PS complex 5a and the NGN system 14. Because of limited trunk resources, the selection of the rerouted prefix and the required capacity must be aligned.

In the next step, illustrated in **Fig. 1d****,** the NGN system 14 is inserted into the communication between the carrier 3, namely its first edge PS 9, and the first complex PS 6. Because the carrier 3 should not detect any change in the communication with the regional PSTN network 2, the NGN system 14 will use the same point codes as the first complex PS, here PC 6, for communicating with the first edge PS 9. For this purpose, the NGN system 14 defines logical networks, here named LN11, to separate the traffic from other signaling links. Signaling line 27 is redirected (see arrow) and now connects first edge PS 9 and logical network 11 of NGN system 14. For the communication with the first complex PS 6, the NGN system 14 uses another logical network, here named LN10, and the point code of the peering first edge PS 9 of carrier 3, here PC 2. Finally, the first complex PS 6 believes to communicate with the peering carrier 3 and vice versa. The trunks (i.e. the bearer line) 23 are still connected between the first complex PS 6 and the first edge PS 9.

In the next step, illustrated in **Fig. 1e****,** a part (such as about 50%) of the trunks (i.e. bearer line) 23 between the first complex PS 6 and the peering first edge PS 9 will be reconnected to the NGN system 14 ("trunk group split"). To reduce the impact, the trunks to be reconnected (i.e. split part) 24 will be taken out of service before reconnecting them. After connecting them to the NGN system 14, the split part 24 will be taken into service. Then, these trunks 24 will primarily maintain new setup requests. The remaining trunks (remaining part) 25 between the first complex PS 6 and the peering carrier 3 will be used in case of saturating the NGN trunks 24 ("overflow trunks"). This shall reduce the load between the NGN system 14 and the PS complex 5a. The required signaling now comes from the NGN system 14 and the PS complex 5a concurrently; note that the carrier 3 is not aware of this. Since the first complex PS 6 and the NGN system 14 never reference the same trunk ID (CIC), ISUP can be mixed accordingly, see ISUP flow arrows 26a, 26b.

**Fig. 1f** illustrates the final NGN system routing for originating traffic, i.e. outgoing calls. As soon as the communication with split trunks 24 works properly, the remaining trunks 25 between the first complex PS 6 and the peering carrier 3 can also be transferred to the NGN system 14. Then, all traffic will be switched between the NGN system 14 and the peering carrier 3 via the completely transferred bearer line 28. The PS complex 5a becomes obsolete for that route of traffic. Because the traffic between the regional PSTN network 2 and the first complex PS 6 is reduced after this, spare resources can be shifted towards the communication between the regional PSTN network 2 and the NGN system 14. These resources are appreciated for the migration of the next prefixes. Note that the migration can be performed prefix by prefix as described here, or alternatively PS complex by PS complex, as another example.

### Inventive method with respect to incoming calls

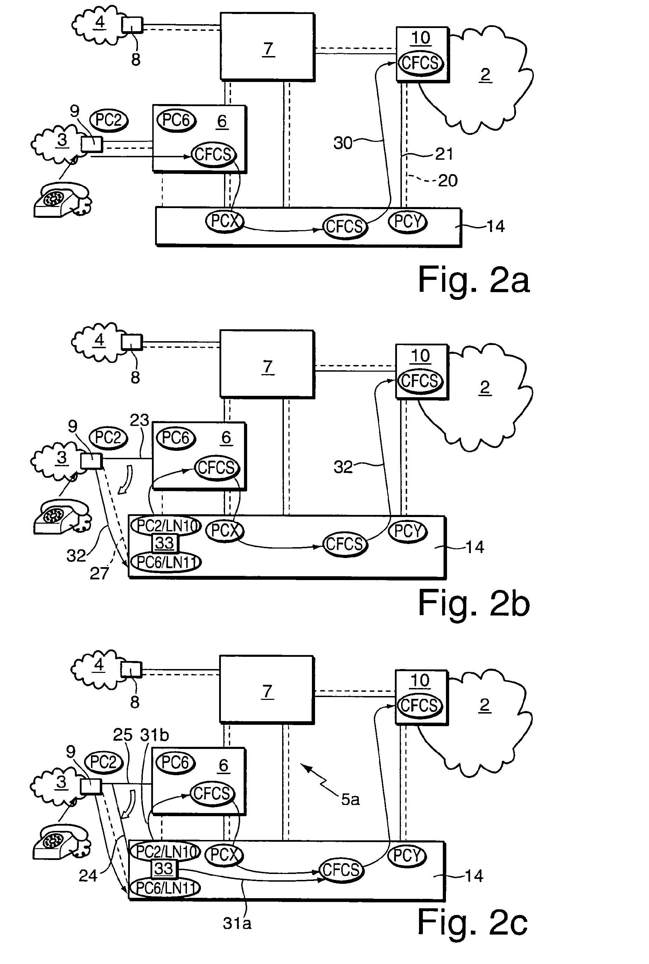

Figures 2a-2d illustrate the inventive method for the case of calls (telecommunication connections) originating from the peering foreign carrier 3 and targeting (terminating at) the regional PSTN network 2 ("inbound" or "incoming" calls). The method is to a great extent corresponding to the example of Figs. 1a-1f.

Having introduced the NGN system already, **Fig. 2a** shows the ISUP flow (see arrows 30) for inbound signaling. After the rerouting of a country prefix (as described before), all inbound traffic will be passed from the first complex PS 6 to the NGN system 14. In case of calls routed to the regional PSTN network 2, the NGN system 14 will use direct interfaces to that regional PSTN network 2, namely the second edge PS 10 and lines 20, 21.

After reconnecting of the SS7 signaling links (see signaling line 27 in Fig. 2b), all ISUP traffic (see arrows 32) will be passed by the NGN system 14 to the first complex PS 6 (i.e. the old PS complex 5a). In this case, the NGN system 14 again transports SS7 messages from one logical network, here LN 11, to another one, here LN10.

Then, see **Fig. 2c****,** about 50% of the trunks (split part 24 of bearer line 23) will be transferred to the NGN system 14. The other remaining part 25 remains with the first complex PS 6. The NGN system 14 can route incoming ISUP messages according to the CIC (=circuit identification number), compare CIC function 33. The so called CIC routing allows to terminate all ISUP which are related to the trunks 24 (referenced by CIC) that are connected between the peering carrier 3 and the NGN system 14 (compare arrows 31 a). The other ISUP messages for trunks 25 between the peering carrier 3 and the complex PS 5a will be forwarded (compare flow 31 b). The CIC routing finally decides who gets the ISUP message, i.e. the NGN system 14 or the PS complex 5a.

Fig. 2d shows the final telecommunication network 1 after migration. After the NGN system 14 works well with half the trunk group 24, the remaining trunks 25 can be transferred from the old PS complex 5a, resulting in a completely transferred bearer line 28. After the transfer, the PS complex 5a is no further included for any calls with that peering carrier 3, see ISUP flow 33.

### Inventive method with transit calls

Figures 3a-3d illustrate the inventive method for the case of transit calls, i.e. calls originating from a foreign carrier 3 and targeting at another foreign carrier 4.

In the example shown, starting at **Fig. 3a****,** the provider intends to replace (migrate) only the first complex PS 6 (i.e. the PS complex 5b to be migrated comprises only one PS) of his conventional PSTN network 5. The public switch 7a, via which the first complex PS 6 is connected to the point of interconnection public switch 8 of foreign carrier 4, therefore acts as the second edge PS 7a here. Note that in this migration, PS 10 and regional PSTN network 2 are not involved.

Calls are routed from one peering foreign carrier 3 to another peering foreign carrier 4 here, compare ISUP flow 40. The call is routed in the example shown via the two PSs 6, 7a.

The NGN system 14 has been introduced to the PS complex 5a and the second edge PS 7a already, establishing signaling lines 15, 18, bearer lines 16, 19, and auxiliary signaling line 17. At the NGN system 14, first additional point code PC X and second additional point code PC Y' have been assigned with respect to the signaling connections 15 and 18.

After reconnection of the SS7 links (see signaling line 27), all signaling traffic is routed via the NGN system 14, see **Fig. 3b** with ISUP flow 41, as described in before.

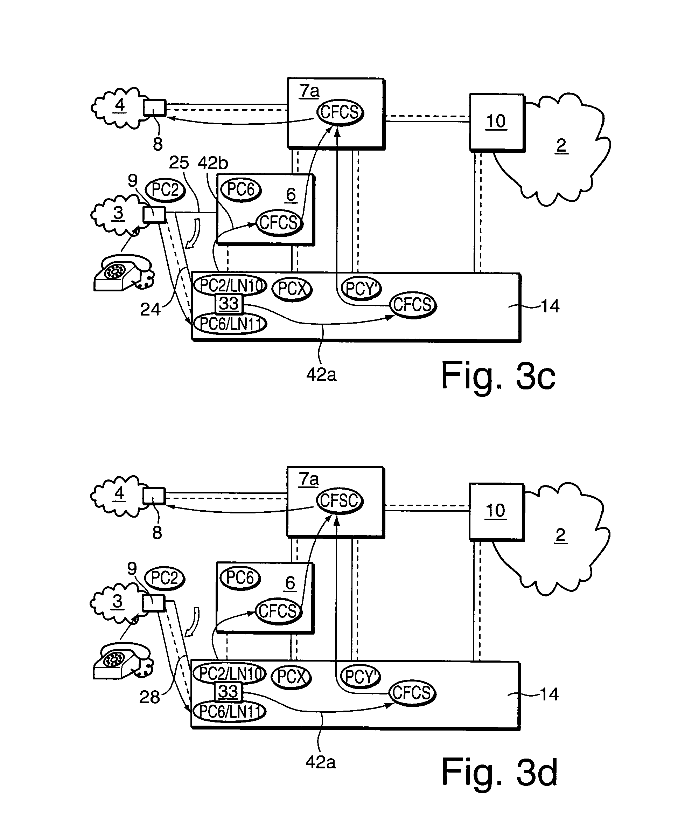

Then, see **Fig. 3c****,** about 50% of the trunk group resources are reconnected to the NGN system 14. In case of the transit calls, the calls are now routed to the second edge PS 7a via either the split trunk 24 and the NGN system 14 (see arrows 42a), or via the remaining trunk 25 and the first complex PS 6 (see arrows 42b).

After the NGN system 14 performs well, the remaining trunk 25 is reconnected from the old first complex PS 6 to the NGN system 14, resulting in a completely transferred trunk 28, see **Fig. 3d****.**

### Benefits of the invention

The invention allows a seamless migration of class 4 and class 5 networks, in particular allowing the migration of existing telephone networks. The migration can be done smoothly and at a low risk of outage. In particular, telecom networks producing high revenue may be migrated without loosing significant amounts of money. By means of the trunk group split, a partial testing within the new NGN environment is possible. After that test, the telecom provider can be sure about the stability of the NGN system and finally transfer all trunks to the NGN system (NGN network). More specifically, the migration can be done for example with about 50% of the trunks, with the remaining trunks staying functional. Trunks to be migrated are bared from new telecommunication connections in advance over enough time so that the trunks to be migrated are basically free at the point of time of migration. In times of low traffic, such as at night, when the network utilization is far less than 50% (i.e. less than the fraction of remaining trunks), the inventive migration can be done practically without any outage: At every point of time, there are enough bearer lines available in the telecommunication network, even if the split part of the trunks does not work properly at the beginning. On the other hand, the risk in case of a malfunctioned NGN system is limited to just a part of the network capacity and a fallback from the NGN to the conventional PSTN is simple. Finally, the invention leads to a much lower migration risk.

The invention relates to a method for migrating a public switch (=PS) complex (5a; 5b) to a next generation network (=NGN) system (14) in a telecommunication network (1), wherein the PS complex (5a; 5b) is connected at least to a first edge PS (9) and a second edge PS (10; 7a), wherein the PS complex (5a; 5b) comprises a first complex PS (6) connected to the first edge PS (9), with the following steps:
a) the NGN system (12) is introduced to the telecommunication system (1),
   wherein new connections including a signalling line (15, 18, 20) and a bearer line (16, 19, 21) each are established between at least
   - the NGN system (14) and the first complex PS (6), and
   - the NGN system (14) and the second edge PS (10; 7a), and wherein an auxiliary signalling line (17) is established between the NGN system (14) and the first complex PS (6);
b) the NGN system (14) is inserted into the signalling communication between the first edge PS (9) and the first complex PS (6) by
   - establishing a first logical network (LN10) on the NGN system (14), using the same point code (PC 2) as the first edge PS (9), and linking the first complex PS (6) with the first logical network (LN10) by means of the auxiliary signalling line (17),
   - establishing a second logical network (LN11) on the NGN system (14), using the same point code (PC 6) as the first complex PS (6), and linking the first edge PS (9) and the second logical network (LN11) by disconnecting the signalling line (27) between the first edge PS (9) and the first complex PS (6) from the first complex PS (6), and reconnecting said signalling line (27) to the second logical network (LN11). The inventive method reduces administrative communication effort and risk of outage upon migration.

## Claims

1. Method for migrating a public switch (=PS) complex (5a; 5b) to a next generation network (=NGN) system (14) in a telecommunication network (1),
wherein the PS complex (5a; 5b) is connected at least to a first edge PS (9) and a second edge PS (10; 7a),
wherein the PS complex (5a; 5b) comprises one or more complex PSs (6, 7), with a first complex PS (6) connected to the first edge PS (9),
wherein the connections between PSs (6, 7, 8, 9, 10; 7a) in the telecommunication network (1) comprise signalling lines (11; 15, 18, 20) and bearer lines (12; 16, 19, 21), and wherein the first edge PS (9) has assigned a point code (PC 2), and the first complex PS (6) has assigned a point code (PC 6), with the following steps:
a) the NGN system (12) is introduced to the telecommunication system (1), wherein new connections including a signalling line (15, 18, 20) and a bearer line (16, 19, 21) each are established between at least
- the NGN system (14) and the first complex PS (6), with assigning a first additional point code (PC X) to the NGN system (14), and
- the NGN system (14) and the second edge PS (10; 7a), with assigning a second additional point code (PC Y; PC Y') to the NGN system (14), and wherein an auxiliary signalling line (17) is established between the NGN system (14) and the first complex PS (6);
b) the NGN system (14) is inserted into the signalling communication between the first edge PS (9) and the first complex PS (6) by
- establishing a first logical network (LN10) on the NGN system (14), using the same point code (PC 2) as the first edge PS (9), and linking the first complex PS (6) with the first logical network (LN 10) by means of the auxiliary signalling line (17),
- establishing a second logical network (LN11) on the NGN system (14), using the same point code (PC 6) as the first complex PS (6), and linking the first edge PS (9) and the second logical network (LN11) by disconnecting the signalling line (27) between the first edge PS (9) and the first complex PS (6) from the first complex PS (6), and reconnecting said signalling line (27) to the second logical network (LN 11).

2. Method according to claim 1, **characterized by** the further step of
c) performing a trunk group split of the bearer line (23) connecting the first edge PS (9) and the first complex PS (6), such that a split part (24) of said bearer line (23) connects the first edge PS (9) and the NGN system (14), and a remaining part (25) of said bearer line (23) still connects the first edge PS (9) and the first complex PS (6), and handling telecommunication connections of the telecommunication network (1) between the first edge PS (9) and the second edge PS (10; 7a) by
- routing a first part (26b; 31 a; 42a) of said telecommunication connections by means of a sequence of: second edge PS (10; 7a) - NGN system (14) via second additional point code (PC Y; PCY')-second local network (LN11) using the point code (PC 6) of the first complex PS (6) - split part (24) of said bearer line (23) - first edge PS (9), or the other way around;
- routing a second part (26a; 31 b; 42b) of said telecommunication connections by means of a sequence of: second edge PS (10; 7a) - NGN system (14) via second additional point code (PC Y; PC Y') - NGN system (14) via first additional point code (PC X) - first complex PS (6) - remaining part (25) of said bearer line (23) - first edge PS (9), or the other way around.

3. Method according to claim 2, **characterized in that** the trunk group split has a fixed ratio of first part (26b; 31 a; 42a) and second part (26a; 31 b; 42b) telecommunication connections, for instance 50% / 50%,

4. Method according to claim 2, **characterized in that** telecommunication connections to be established are primarily routed as first part (26b; 31 a; 42a) up to the capacity of the first part routing, and further telecommunication connections are routed as overflow second part (26a; 31 b; 42b).

5. Method according to claim 2, **characterized in that** after step c), if the routing of the first part (26b; 31 a; 42a) of the telecommunication connections works fine, the remaining part (25) of said bearer line (23) is also transferred to the NGN system (14), and all telecommunication connections are routed by means of the sequence of: second edge PS (10; 7a) - NGN system (14) via second additional point code (PC Y; PC Y') - second local network (LN11) using the point code (PC 6) of the first complex PS (6) - completely transferred bearer line (28) - first edge PS (9), or the other way around.

6. Method according to claim 2, **characterized in that** in case a telecommunication connection is originating from the second edge PS (10; 7a) and terminating at the first edge PS (9), a call state machine (CFCS) within the NGN system (14) is used for making a routing decision for said telecommunication connection.

7. Method according to claim 2, **characterized in that** in case a telecommunication connection is originating form the first edge PS (9) and terminating at the second edge PS (10; 7a), a CIC routing function (33) established between the first and second logical networks (LN10, LN11) in the NGN system (14) is used for making a routing decision for said telecommunication connection.

8. Method according to claim 1, **characterized by** a subsequent step c') of completely transferring the bearer line (23) connecting the first edge PS (9) and the first complex PS (6) from the first complex PS (6) to the NGN system (14) in a single step, and routing all telecommunication connections by means of the sequence of: second edge PS (10; 7a) - NGN system (14) via second additional point code (PC Y; PC Y')) - second logical network (LN11) using the point code (PC 6) of the first complex PS (6) - completely transferred bearer line (28) - first edge PS (9), or the other way around.

9. Method according to claim 1, **characterized in that** the first edge PS (9) is a point of interconnection PS of a public switched telecommunication network (=PSTN), and/or the second edge PS (10; 7a) is a point of interconnection PS of a PSTN, in particular wherein the PSTN is a national telephone network (2) or carrier (3, 4).

10. Method according to claim 1, **characterized in that** a multitude of PS complexes (5a; 5b) is migrated according to claim 1 subsequently.
